# EUROPEAN PATENT SPECIFICATION

(11) **EP 3 874 978 B1**
(45) Date of publication and mention of the grant of the patent: **03.12.2025**
(21) Application number: 18938792.1
(22) Date of filing: 22.11.2018
(51) Int. Cl.: A24F 40/53, A24F 40/65, G06F 21/44

(54) **CONTROL METHOD AND DEVICE FOR ELECTRONIC CIGARETTE AND COMPUTER STORAGE MEDIUM**
VERFAHREN UND VORRICHTUNG ZUR STEUERUNG EINER ELEKTRONISCHEN ZIGARETTE UND COMPUTERSPEICHERMEDIUM
PROCÉDÉ DE COMMANDE ET DISPOSITIF DE COMMANDE POUR CIGARETTE ÉLECTRONIQUE ET SUPPORT D'INFORMATIONS INFORMATIQUE

(30) Priority: 02.11.2018 CN 201811302699
(43) Date of publication of application: 08.09.2021
(73) Proprietor: Changzhou Patent Electronic Technology Co., Ltd, Changzhou, Jiangsu 213022 (CN)
(72) Inventor: QIU, Weihua, Changzhou, Jiangsu 213125 (CN); WU, Jie, Changzhou, Jiangsu 213125 (CN)
(74) Representative: Zaboliene, Reda
(86) International application number: PCT/CN2018/116933
(87) International publication number: WO 2020/087598

(56) References cited:
- WO-A1-2017/205692
- CN-A- 107 016 783
- CN-A- 107 205 469
- CN-A- 109 288 138
- CN-U- 204 742 634
- US-A1- 2013 284 192
- US-A1- 2015 181 945
- US-A1- 2015 196 057
- US-A1- 2018 213 849
- US-B2- 9 743 691

## Description

### TECHNICAL FIELD

The present disclosure relates to the technical field of simulated smoking, and more particularly, relates to a control method, device for an electronic cigarette and computer storage medium.

### BACKGROUND

E-cigarettes are electronic products that imitate cigarettes, which can produce smoke through atomizing substrates (such as e-liquid), the smoke can be inhaled by the user of the electronic cigarette from the cigarette holder, so as to achieve the purpose of simulating smoking.

However, in order to ensure the physical and mental health of smokers, the user usually needs to perform identity authentication before using the electronic cigarette, the existing identity authentication method usually judges whether the electronic cigarette user is the holder himself, and if so, the user is allowed to use it. Patent document US2015181945 discloses relevant prior art.

### SUMMARY

In order to solve the problem in the prior art that when the user of the electronic cigarette is the holder, the user can use the electronic cigarette normally, the embodiment of the present disclosure provides a control method for the electronic cigarette and device and electronic cigarette. The technical solution is as follows:
The first aspect, a control method for the electronic cigarette, comprising:
obtaining identity authentication information, wherein the identity authentication information comprises identity identifier;
sending the identity authentication information to a server;
receiving an authentication result fed back by the server, the authentication result is a result of the server determining whether the conditions for using electronic cigarettes are satisfied according to the identity authentication information, the conditions of use comprising having reached permitted smoking age;
controlling the electronic cigarette to perform corresponding operations according to the authentication result.

In one embodiment, before receiving the authentication result fed back by the server, the method further comprises:
obtaining the device information of the electronic cigarette, wherein the device information comprises at least one of the serial number, device type, manufacturer, and delivery time of the electronic cigarette;
sending the device information to the server, the server is configured to determine the authentication result according to the identity authentication information and the device information.

In one embodiment, obtaining identity authentication information comprises:
receiving the device information input by the user;
   and/or,
scanning the ID card to identify the identity authentication information in the scanned image;
invoking a third-party application, to obtain the identity authentication information from the third-party application.

In one embodiment, the control method further comprises: after the communication connection between the terminal and the electronic cigarette is disconnected, if the terminal establishes a communication connection with the electronic cigarette again, the step of obtaining identity authentication information is performed again.

The second aspect, a control method for the electronic cigarette, comprising:
receiving the identity authentication information sent by a terminal, wherein the identity authentication information comprises an identity identifier;
confirming whether the conditions of use of the electronic cigarette are met according to the identity authentication information, and obtaining the authentication result, the conditions of use comprising having reached permitted smoking age;
feeding back the authentication result to the terminal.

In one embodiment, the control method further comprises:
receiving the device information of the electronic cigarette sent by the terminal, wherein the device information comprises at least one of the serial number, device type, manufacturer, and delivery time of the electronic cigarette;
confirming whether the conditions of use of the electronic cigarette are met according to the identity authentication information, and obtaining the authentication result, comprises:
determining whether the condition of use is satisfied according to the identity authentication information and the device information, and obtaining the authentication result.

In one embodiment, if the device information comprises the serial number and/or device type of the electronic cigarette, determining whether the condition of use is satisfied according to the identity authentication information and the device information, comprises:
obtaining the permitted smoking age corresponding to the electronic cigarette, according to the device information;
determining whether the user reaches the permitted smoking age corresponding to the electronic cigarette, according to the identity authentication information,

In one embodiment, the device information includes the serial number and manufacturer of the electronic cigarette, determining whether the condition of use is satisfied according to the identity authentication information and the device information further comprises:
detecting whether the actual manufacturer of the electronic cigarette with the serial number in the device information matches the manufacturer in the device information.

In one embodiment, the device information further comprises the factory time of the electronic cigarette, determining whether the condition of use is satisfied according to the identity authentication information and the device information further comprises:
detecting whether the actual delivery time of the electronic cigarette with the serial number produced by the manufacturer matches the delivery time in the device information.

In one embodiment, the identity authentication information further comprises a user avatar and/or identity information of a user who redeemed the electronic cigarette; confirming whether the conditions of use of the electronic cigarette are met according to the identity authentication information and obtaining the authentication result comprises:
if the identity authentication information also comprises a user avatar, obtaining the ID avatar corresponding to the identity identifier from the database, and detecting whether the ID avatar matches the user avatar;
if the identity authentication information also comprises the identity information of the user who redeemed the electronic cigarette, detecting whether the identity information matches the identity information of the user corresponding to the identity identifier.

The third aspect, a computer-readable storage medium, comprising one or more instructions are stored in the computer-readable storage medium; when the one or more instructions are executed, the control method for the electronic cigarette involved in any one optional implementation of the first aspect is implemented.

The fourth aspect, a computer-readable storage medium, comprising one or more instructions are stored in the computer-readable storage medium; when the one or more instructions are executed, the control method for the electronic cigarette involved in any one optional implementation of the second aspect is implemented.

The fifth aspect, a control device for an electronic cigarette, comprising:
a memory, at least one program instruction is stored in the memory; and
a processor, the processor loads and executes the at least one program instruction to implement the control method for the electronic cigarette involved in any one optional implementation of the first aspect.

The sixth aspect, a control device for an electronic cigarette, comprising:
a memory, at least one program instruction is stored in the memory; and
a processor, the processor loads and executes the at least one program instruction to implement the control method for the electronic cigarette involved in any one optional implementation of the second aspect.

The beneficial effects brought about by the technical solutions provided by the embodiments of the present disclosure are:
the method for controlling electronic cigarettes provided in this embodiment sends identity authentication information to the server through the terminal, the identity authentication information includes the identity mark, the server performs authentication based on the identity authentication information and feeds back the authentication result to the terminal, the terminal controls the electronic cigarette to perform corresponding operations according to the authentication result. The control method solves the problem that the user of the electronic cigarette can only be authenticated as the holder in the prior art, and achieves the effect of authenticating whether the user of the electronic cigarette is legal.

### BRIEF DESCRIPTION OF THE DRAWINGS

In order to explain the technical solutions in the embodiments of the present disclosure more clearly, the following will briefly introduce the accompanying drawings used in the description of the embodiments. Obviously, the accompanying drawings in the following description are only some embodiments of the present disclosure. For those of ordinary skill in the art, other drawings can be obtained based on these drawings without creative work.
FIG. 1 is a schematic diagram of an implementation environment involved in a control method for an electronic cigarette provided by various embodiments of the present disclosure.
FIG. 2 is a method flowchart of a control method for the electronic cigarette provided by an embodiment of the present disclosure.
FIG. 3 is a method flowchart of a control method for the electronic cigarette provided by an embodiment of the present disclosure.
FIG. 4 is a schematic diagram of a display interface of the terminal when the terminal obtains identity authentication information and device information according to an embodiment of the present disclosure.

### DETAILED DESCRIPTION OF PREFERRED EMBODIMENTS

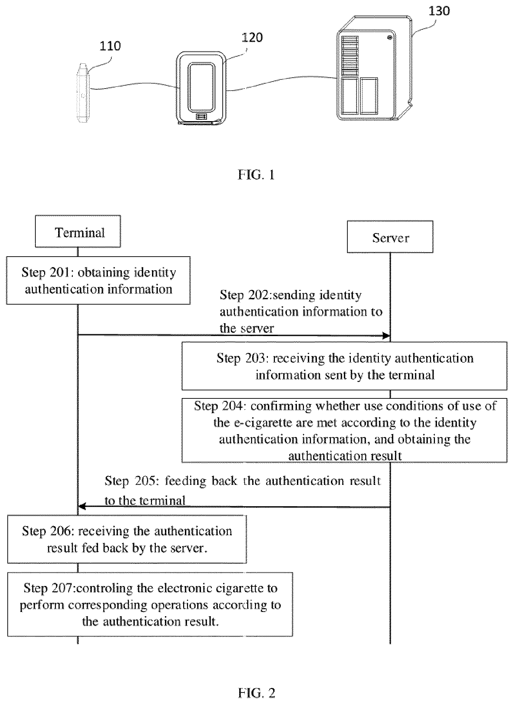

Please refer to FIG. 1, which shows a schematic diagram of the implementation environment involved in various embodiments of the present disclosure. As shown in FIG. 1, the implementation environment may comprise an electronic cigarette 110, a terminal 120, and a server 130. Among them:

The electronic cigarette 110 may be an e-liquid type, a flue-cured cigarette, of various other types of electronic cigarettes, and in actual implementation, it can be a small cigarette or a large cigarette such as a box. A communication module is provided in the electronic cigarette 110, such as Bluetooth module, WiFi (Wireless-Fidelity, wireless fidelity) module or USB (Universal Serial Bus, universal serial bus) interface, etc.. The electronic cigarette 110 communicates with the terminal 120 through a communication module.

The terminal 120 can be an electronic device such as a mobile phone, a tablet computer, a notebook computer, or a desktop computer, the terminal 120 can be connected to the server 130 through a wired or wireless network. The terminal 120 can be installed with a client, and communicate with the server 130 through the client. Wherein, the client can be an application program used to manage and/or control the electronic cigarette 110.

The server 130 is a background server and is configured to provide background services for the terminal 120. For example, the server 130 is a background server corresponding to the client installed in the terminal 120. In actual implementation, it can be one server or a server cluster composed of multiple servers.

Please refer to FIG. 2, which shows a control method for the electronic cigarette provided by an embodiment of the present disclosure. In this embodiment, the control method for the electronic cigarette is used in the implementation environment shown in FIG. 1. As shown in FIG. 2, the control method for the electronic cigarette comprises:

Step 201: The terminal obtains identity authentication information.

When the user needs to be authenticated, the user can open the client in the terminal, and the terminal obtains the identity authentication information through the client. Among them, the user can display the authentication prompt information when using the e-cigarette for the first time; after the user views the authentication prompt information, the terminal is triggered to perform this step. Of course, in actual implementation, the electronic cigarette can also display the authentication prompt information every time the user turns on and uses it, which is not limited here.

The identity authentication information comprises identity identification. Among them, the identity identifiers mentioned in this embodiment and the following embodiments are only identifiers used to uniquely identify a user in a certain country or region; in actual implementation, the identity identifier may be composed of at least one of numbers, letters, and characters. For example, in China, the identification can be an ID number or passport number; for another example, in the United States, the identification can be a driver's license, passport number, or social security number, etc.

In addition, the above only takes the identity authentication information comprising the identity identifier as an example. In actual implementation, the identity authentication information may also comprise other information, such as avatar information, region, and identity information of the purchaser of the electronic cigarette that needs to be authenticated for redemption, and so on. It will not be repeated here, and will be described in detail in the following embodiments.

This step comprises the following three implementation modes:
The first mode is to receive the identity authentication information entered by the user..

When the user needs to use the electronic cigarette, the user can open the identity authentication interface in the terminal, and enter the identity authentication information in the identity authentication interface. Wherein, the identity authentication information input by the user can be input by the user through an input device such as a keyboard or a touch screen. It can also be uploaded by the user by uploading a file.

The second mode is to scan the ID card to identify the identity authentication information in the scanned image.

When the terminal has an image collection function, the terminal can also scan the ID card, and then recognize the identity authentication information in the scanned image through OCR (Optical Character Recognition). For example, the terminal collects the image information of the ID card through the camera to identify the identity mark in the image information.

Among them, because the content in the ID card of the same country or region meets a certain template, therefore, the content in the area where the identity mark is llocated in the image information can be identified, and then the identity mark, that is, the identity authentication information can be obtained.

In this embodiment, only the terminal obtains the identity authentication information through the above two possible acquisition methods as an example. In actual implementation, it can also be obtained through other possible methods, for example, receiving identity authentication information sent by other devices will not be repeated here.

The third mode is to call a third-party application to obtain identity authentication information from the third-party application.

When the client has the permission to call third-party applications, if the user needs to be authenticated, after the user triggers authentication in the client, the client can call a third-party application to obtain the identity authentication information from the third-party application. Among them, the third-party application program is an application program that has been authenticated, and in this embodiment may be an application program that has passed real-name authentication. In actual implementation, the third-party application can be a social application, a payment application, or an audio and video playback application, and so on.

Optionally, after the client invokes the third-party application, it can also obtain the identity authentication information from the third-party application only after receiving a confirmation instruction confirming that it agrees to invoke the third-party application; when receiving a cancellation instruction to cancel calling the third-party application, the identity authentication information is obtained through any one of the above two methods.

It should be noted that when the identity authentication information comprises two or more types of content, the terminal may also obtain part of the identity authentication information through one of the above-mentioned three obtaining methods, and obtain other identity authentication information through other obtaining methods, which is not limited.

Step 202: The terminal sends identity authentication information to the server.

Step 203: The server receives the identity authentication information sent by the terminal.

Step 204: The server confirms whether the conditions of use of the electronic cigarette are met according to the identity authentication information, and obtains the authentication result.

Conditions of use comprise having reached the age allowed to smoke. The permitted smoking age can be the age pre-stored in the server, and in actual implementation, the permitted smoking age may be different according to different countries and regions. For example, in China, the permitted age for smoking can be 18 years old; for another example, in the United States, the permitted smoking age can be 16 years old.

Optionally, when the user's age field is comprised in the identity, the server can directly extract the age from the identity. For example, if the identity identifier received by the server is 3217201998XXXXXXXX, the server can determine that the user was born in 1998, and the user's age is 20 years old, in 2018.

When the user's age field is not comprised in the identity, since the ID can uniquely identify a user, the server can also query the age of the user corresponding to the ID according to the pre-stored information in the database. For example, if the content stored in the database is shown in Table 1, and the received ID is number 1, the server can query that the user's age is 40 years old.

**Table 1**

| Identification | Age |
|---|---|
| Number 1 | 40 |
| Number 2 | 22 |
| Number 3 | 55 |
| Number 4 | 38 |
| ... | ... |
| Number n | 60 |

After the server determines the age, the server can detect whether the age of the user requesting authentication reaches the permitted smoking age, when the test result is that the user's age is reached the permitted smoking age, a certification result indicating that the certification is passed is generated. Conversely, when the test result is that the user's age is not reached the permitted smoking age, an authentication result indicating that the authentication has failed is generated.

Step 205: The server feeds back the authentication result to the terminal.

Step 206: The terminal receives the authentication result fed back by the server.

Step 207: The terminal controls the electronic cigarette to perform corresponding operations according to the authentication result.

Optionally, when the authentication result is that the authentication is passed, the terminal can control the electronic cigarette to allow it to work normally; when the authentication result is authentication failure, the terminal can control the e-cigarette to lock, and the e-cigarette is not allowed to work normally, for example, e-cigarettes are not allowed to light up.

In summary, the method for controlling electronic cigarettes provided in this embodiment sends identity authentication information to the server through the terminal, the identity authentication information comprises the identity mark, the server performs authentication based on the identity authentication information and feeds back the authentication result to the terminal, the terminal controls the electronic cigarette to perform corresponding operations according to the authentication result. The control method solves the problem that the user of the electronic cigarette can only be authenticated as the holder in the prior art, and achieves the effect of authenticating whether the user of the electronic cigarette is legal.

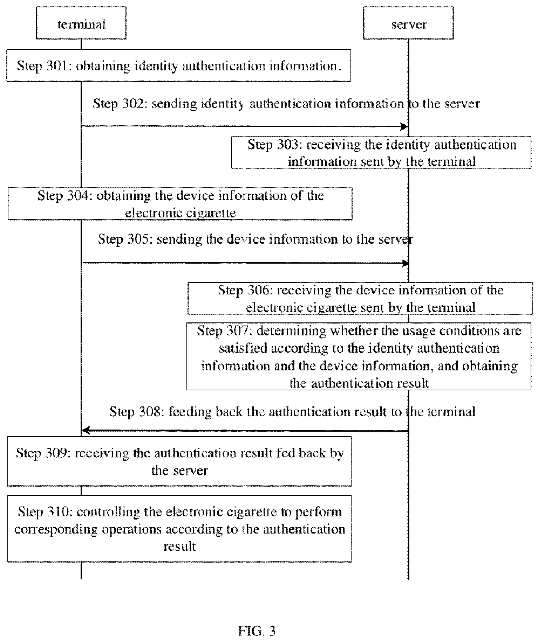

Please refer to FIG. 3, which shows a control method for the electronic cigarette provided by an embodiment of the present disclosure. In this embodiment, the control method for the electronic cigarette is used in the implementation environment shown in FIG. 1. As shown in FIG. 3, the control method for the electronic cigarette comprises:

Step 301: The terminal obtains identity authentication information.

Among them, the identity authentication information comprises identity identification.

Step 302: The terminal sends identity authentication information to the server.

Step 303: The server receives the identity authentication information sent by the terminal.

Step 301 to step 303 are similar to step 201 to step 203 in the foregoing embodiment, and will not be repeated here.

Step 304: The terminal obtains the device information of the electronic cigarette.

The device information comprises at least one of the serial number, device type, manufacturer, and delivery time of the electronic cigarette. The device types comprise e-cigarettes with e-liquid and flue-cured e-cigarettes. Optionally, the device information may also comprise the item number of the manufacturer when designing the electronic cigarette. This embodiment does not limit the specific content of the device information.

The method for obtaining the device information by the terminal can be: receiving the device information input by the user; or, obtaining the device information from the electronic cigarette.

Take the terminal to obtain device information from the e-cigarette as an example. When the user needs to authenticate whether the user can use the electronic cigarette normally, the user can establish a communication connection between the terminal and the electronic cigarette. For example, taking the terminal as a computer as an example, the user can connect the electronic cigarette to the computer through the USB data cable, and after the connection is established, obtain device information from the electronic cigarette through a USB data cable. For another example, taking the terminal as a mobile phone as an example, the user can connect the e-cigarette with the mobile phone through Bluetooth, and then read the device information from the e-cigarette through the Bluetooth connection.

Step 305: The terminal sends the device information to the server.

Step 306: The server receives the device information of the electronic cigarette sent by the terminal.

Step 307: The server determines whether the usage conditions are satisfied according to the identity authentication information and the device information, and obtains the authentication result.

Due to the difference in the content of the device information, the authentication method of the server is also different. Therefore, the following will explain different situations separately.

The first mode, when the device information comprises the serial number and/or device type, usually, different types of e-cigarettes may have different permitted smoking ages. For example, the permitted smoking age of e-liquid e-cigarettes is usually less than that of flue-cured cigarette, therefore, this step can comprise:

First, obtain the permitted smoking age corresponding to the e-cigarette according to the device information.

The server may pre-store the correspondence between different e-cigarettes and the permitted smoking age corresponding to the e-cigarette. Therefore, after the server receives the device information, the server can obtain the corresponding smoking permitted age according to the device information. For example, if the received device information of the electronic cigarette is represented as an e-cigarette, the permitted smoking age obtained by the server is 18 years old; for another example, if the received device information of the electronic cigarette is represented as a flue-cured electronic cigarette, the permitted smoking age obtained by the server is 22 years old.

Optionally, the corresponding relationship stored in the server may be the corresponding relationship between the serial number of the electronic cigarette and the age allowed to smoke. In this case, the device information must comprise the serial number; and if the corresponding relationship stored in the server is the corresponding relationship between the type of e-cigarette device and the age allowed to smoke; then the device information can be at least one of the serial number and the device type, and when the device information comprises the device type, directly query the corresponding relationship to obtain the corresponding permitted smoking age. If the device information comprises the serial number, the serial number uniquely identifies an e-cigarette. Therefore, the server can query the device type of the e-cigarette according to the serial number, and after querying the device type, query the above-mentioned corresponding relationship to obtain the corresponding Age allowed to smoke.

Second, according to the identity authentication information, it is determined whether the user reaches the permitted smoking age corresponding to the e-cigarette.

After inquiring the corresponding permitted smoking age, it can be determined according to the identity authentication information whether the user's age has reached the inquired permitted smoking age. If it is reached, an authentication result indicating that the authentication has passed is generated; otherwise, if it is not reached, an authentication result indicating that the authentication has failed is generated. This step is similar to step 204 in the foregoing embodiment, and will not be repeated here.

It needs to be added that when the identity authentication information comprises the information obtained by the client by invoking a third-party application, and the third-party application's age authentication condition is the same as the authentication condition required in this embodiment, then in this step , The server can directly call the age authentication result of the server corresponding to the third-party application. Or it is directly assumed that the age authentication is passed without performing the above judgment, which will not be repeated here in this embodiment.

The second mode, when the device information comprises the serial number and manufacturer of the e-cigarette, in addition to the step of judging age, this step can also comprise: detecting whether the actual manufacturer of the electronic cigarette with the serial number in the device information matches the manufacturer in the device information; if it matches, when the age also meets the conditions, the authentication is determined to be passed, otherwise, the authentication fails.

Optionally, this step may comprise: the server queries the database for the actual manufacturer of the electronic cigarette with the serial number in the production equipment information, and detects whether the queried actual manufacturer matches the manufacturer in the equipment information. Or, the server queries the database for each serial number of the manufacturer in the device information, and detects whether the serial number in the device information is among the queried serial numbers.

The third mode, when the device information comprises the serial number of the electronic cigarette, the manufacturer, and the time of delivery, in addition to determining the age, this step may also comprise: detecting the actual delivery of the electronic cigarette with the serial number produced by the manufacturer Whether the time matches the factory time in the device information.

Optionally, similar to the second case above, the server queries the database for the actual delivery time of the product with the serial number produced by the manufacturer in the device information, and detects whether the actual factory time queried is consistent with the factory time in the device information.

It should be noted that the above only uses the device information as an example of the above several situations. Optionally, when the device information comprises the serial number, manufacturer, and time of delivery, or comprises the device type, manufacturer, and time of delivery, the server can also obtain the factory record within the factory time according to the manufacturer and factory time in the device information, and detect whether the factory record comprises the product of the serial number in the device information or the product of the device type in the device information. If it is comprised, if the age judgment also meets the conditions, a certification result indicating that the certification has passed is generated. Otherwise, an authentication result indicating the authentication failure is generated.

Step 308: The server feeds back the authentication result to the terminal.

Step 309: The terminal receives the authentication result fed back by the server.

Step 310: The terminal controls the electronic cigarette to perform corresponding operations according to the authentication result.

In summary, the method for controlling electronic cigarettes provided in this embodiment sends identity authentication information to the server through the terminal, the identity authentication information comprises the identity identifier, and the server performs authentication according to the identity authentication information, and feeds back the authentication result to the terminal, the terminal controls the electronic cigarette to perform corresponding operations according to the authentication result. The problem in the prior art that only the user of the electronic cigarette can be authenticated is solved, and the effect of authenticating whether the user of the electronic cigarette is legal is achieved.

In each of the foregoing embodiments, only the identity authentication information comprising the identity identifier is used as an example for illustration. In actual implementation, the identity authentication information also comprises the user avatar and/or the identity information of the user redeeming the electronic cigarette; correspondingly, confirm whether the conditions of use of electronic cigarette are met according to the identity authentication information, and obtain the authentication result, comprising:
If the identity authentication information also comprises a user avatar, the ID avatar corresponding to the identity identifier is obtained from the database, and whether the ID avatar matches the user avatar is detected.

Wherein, the step of acquiring the user's avatar by the terminal may comprise: acquiring an image through an image acquisition device. For example, if the terminal is a mobile phone, an image comprising the user's face is captured through the mobile phone camera. Correspondingly, after the server receives the identity authentication information, the server can first obtain the identity card avatar corresponding to the identity identifier from the database, detect whether the obtained ID avatar matches the user avatar sent by the received terminal, and if they match, when other conditions are also met, an authentication result indicating that the authentication has passed is generated; otherwise, an authentication result indicating that authentication has failed is generated.

Optionally, the above only takes the server to obtain the ID card avatar corresponding to the identity identifier from the database as an example. In actual implementation, when the identity is obtained by the client by calling a third-party application, the server can also obtain the identity card avatar corresponding to the identity identifier from the back-end server corresponding to the third-party application; then it detects whether the user's avatar matches the ID avatar without storing each ID avatar in the database of the server, which will not be repeated here.

Wherein, the step of the server detecting whether the ID card avatar matches the user avatar comprises: detecting whether the similarity between the ID card avatar and the user avatar reaches a preset threshold, if it reaches the preset threshold, the two are considered to match, otherwise, it is considered not to match.

If the identity authentication information also comprises the identity information of the user redeeming the electronic cigarette, it is checked whether the identity information in the identity authentication information matches the identity information of the user corresponding to the identity mark.

The first point that needs to be added is, identity authentication information can also comprise name, region or other information; correspondingly, the server authentication step may further comprise: detecting whether the name and the identity identifier in the identity authentication information match. Optionally, the server may query the name corresponding to the identity identifier in the database, and when the queried name is consistent with the name in the identity authentication information, determine that the name in the identity authentication information matches the identity identifier.

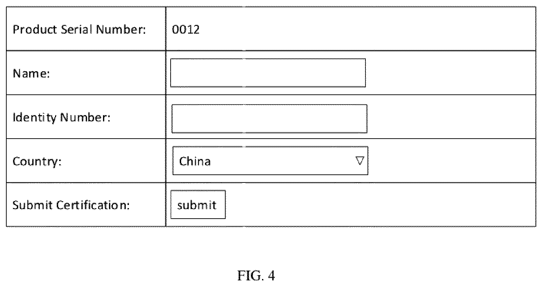

The second point that needs to be explained is that the above only uses the terminal to obtain identity authentication information and device information separately as an example. In actual implementation, the terminal can also obtain the above two kinds of information at the same time. If the terminal is a computer, and the identity authentication information comprises name, identity, country, and the device information comprises the serial number to illustrate, when the computer establishes a connection with the electronic cigarette via USB, and the user triggers identity authentication on the computer, the computer can display the interface shown in FIG. 4, the interface comprises the serial number of the e-cigarette read from the e-cigarette, the computer can receive the information entered by the user through the input box of the name and identity, and when receiving the submission signal, the computer sends identity authentication information and device information to the server.

The third point that needs to be explained is that the terminal can detect in real time whether the communication connection with the electronic cigarette is disconnected. If it is disconnected, when the terminal establishes a communication connection with the electronic cigarette again, it means that the user requests to use the electronic cigarette again. At this time, in order to authenticate the user of the electronic cigarette, the terminal can obtain the user's identity authentication information again, that is, trigger the above-mentioned control method for the electronic cigarette again. Optionally, after the terminal establishes a communication connection with the e-cigarette again, the terminal can display a prompt message prompting the user to perform identity authentication. Or, the e-cigarette displays prompt information that prompts the user to do identity authentication through the terminal, after viewing the prompt information, the user enters the identity authentication information in the terminal. Correspondingly, the terminal obtains the identity authentication information again, and re-executes the above-mentioned control method for the electronic cigarette. Among them, after the terminal receives the authentication result fed back by the server, the terminal can store the identity authentication information and the authentication result fed back by the server correspondingly, thereafter, when the terminal receives the identity authentication information again, the terminal can detect whether an authentication result corresponding to the acquired identity authentication information is stored. If it has been stored, the stored authentication result will be directly obtained at this time without re-authentication through the server. On the contrary, if it is not stored, the identity authentication will be performed again through the above authentication process, which will not be repeated here in this embodiment.

The fourth point that needs to be explained is that in the third point above, only when the terminal establishes a connection with the electronic cigarette again, the identity authentication information is obtained and then the identity authentication is performed again as an example. In actual implementation, after the terminal re-establishes the connection with the e-cigarette, the terminal directly obtain the authentication result of the electronic cigarette when it is connected to the electronic cigarette, and control the electronic cigarette to perform corresponding operations according to the obtained authentication result. Through the above solution, after the electronic cigarette is authenticated, when the terminal establishes a connection with the electronic cigarette again, the terminal can still achieve the effect of identity authentication even if the terminal is offline. In addition, before the terminal establishes a connection with the electronic cigarette, the terminal usually needs to log in the user name and password first. Only when the user name and password are correct, the terminal can establish a connection with the electronic cigarette. That is, even if other users get the e-cigarette and the terminal at the same time, other users will not be able to establish a connection between the e-cigarette and the terminal because they do not know the correct user name and password. That is to say, electronic cigarettes cannot be used, which can prevent other users from using electronic cigarettes fraudulently.

The fifth point that needs to be explained is that the foregoing embodiments only use the server to perform identity authentication after the terminal obtains the identity authentication information as an example. In actual implementation, the terminal can also perform identity authentication by itself, and the authentication method is similar to the authentication method used by the server, and will not be repeated here.

The sixth point that needs to be explained is that the above steps on the terminal side can be separately implemented as a control method for the electronic cigarette on the terminal side; the steps on the server side can be individually implemented as a control method for the electronic cigarette on the server side.

An embodiment of the present disclosure also provides a computer-readable storage medium, one or more instructions are stored in the computer-readable storage medium; when the one or more instructions are executed by the processor in the electronic cigarette, the method for controlling the electronic cigarette on the terminal side involved in any of the foregoing embodiments is implemented.

An embodiment of the present disclosure also provides a computer-readable storage medium, one or more instructions are stored in the computer-readable storage medium; when the one or more instructions are executed by the processor in the electronic cigarette, the method for controlling the electronic cigarette on the server side involved in any of the foregoing embodiments is implemented.

An embodiment of the present disclosure also provides a control device for an electronic cigarette, the control device comprising: a memory and a processor; at least one program instruction is stored in the memory; the processor loads and executes the at least one program instruction to implement the method for controlling the electronic cigarette on the terminal side involved in any of the foregoing embodiments.

An embodiment of the present disclosure also provides a control device for an electronic cigarette, the control device comprises: a memory and a processor; at least one program instruction is stored in the memory; the processor loads and executes the at least one program instruction to implement the server-side control method for the electronic cigarette involved in any of the foregoing embodiments.

The terms "first" and "second" are only used for descriptive purposes, and cannot be understood as indicating or implying relative importance or implicitly indicating the number of technical features. Therefore, the defined "first" and "second" features may explicitly or implicitly comprise one or more of these features. In the description of the present disclosure, unless otherwise specified, "plurality" means two or more.

Those of ordinary skill in the art can understand that all or part of the steps in the foregoing embodiments can be implemented by hardware, or by a program instructing relevant hardware to be completed. The program can be stored in a computer-readable storage medium. The storage medium mentioned can be a read-only memory, a magnetic disk or an optical disk, etc.

The above-mentioned embodiments merely represent several implementations of the present application, and the descriptions thereof are more specific and detailed, but they shall not be understood as a limitation on the scope of the present application. It should be noted that, for those of ordinary skill in the art, variations and improvements may still be made without departing from the concept of the present application, and all of which shall fall into the protection scope of the present application. Therefore, the scope of protection of the present application shall be subject to the appended claims.

## Claims

1. A control method for an electronic cigarette, comprising:
obtaining identity authentication information, wherein the identity authentication information comprises identity identifier;
sending the identity authentication information to a server;
receiving an authentication result fed back by the server, the authentication result is a result of the server determining whether the conditions for using electronic cigarettes are satisfied according to the identity authentication information, the conditions of use comprising having reached permitted smoking age;
controlling the electronic cigarette to perform corresponding operations according to the authentication result;
wherein the obtaining identity authentication information comprises:
obtaining the identity authentication information from a third-party application in response to receiving a confirmation instruction configured to agree invoking the third-party application; and
obtaining the identity authentication information by scanning an ID card of a user to identify the identity authentication information in the scanned image when receiving a cancellation instruction configured to cancel invoking the third-party application.

2. The control method according to claim **1,** wherein before receiving the authentication result fed back by the server, the method further comprises:
obtaining the device information of the electronic cigarette, wherein the device information comprises at least one of the serial number, device type, manufacturer, and delivery time of the electronic cigarette;
sending the device information to the server, the server is configured to determine the authentication result according to the identity authentication information and the device information.

3. The control method according to claim **1,** wherein the control method further comprises: after the communication connection between the terminal and the electronic cigarette is disconnected, if the terminal establishes a communication connection with the electronic cigarette again, the step of obtaining identity authentication information is performed again.

4. A control method for an electronic cigarette, comprising:
obtaining identity authentication information by a terminal;
receiving the identity authentication information sent by the terminal, wherein the identity authentication information comprises an identity identifier;
confirming whether the conditions of use of electronic cigarette are met according to the identity authentication information, and obtaining the authentication result, the conditions of use comprising having reached permitted smoking age;
feeding back the authentication result to the terminal;
wherein the obtaining identity authentication information by a terminal comprises:
obtaining, by the terminal, the identity authentication information from a third-party application in response to receiving a confirmation instruction configured to agree invoking the third-party application; and
obtaining, by the terminal, the identity authentication information by scanning an ID card of a user to identify the identity authentication information in the scanned image when receiving a cancellation instruction configured to cancel invoking the third-party application.

5. The control method according to claim **4,** wherein the control method further comprises:
receiving the device information of the electronic cigarette sent by the terminal, wherein the device information comprises at least one of the serial number, device type, manufacturer, and delivery time of the electronic cigarette;
confirming whether the conditions of use of the electronic cigarette are met according to the identity authentication information, and obtaining the authentication result, comprises:
determining whether the condition of use is satisfied according to the identity authentication information and the device information, and obtaining the authentication result.

6. The control according to claim **5,** wherein if the device information comprises the serial number and/or device type of the electronic cigarette, determining whether the condition of use is satisfied according to the identity authentication information and the device information, comprises:
obtaining the permitted smoking age corresponding to the electronic cigarette, according to the device information;
determining whether the user reaches the permitted smoking age corresponding to the electronic cigarette, according to the identity authentication information,

7. The control method according to claim **5,** wherein the device information includes the serial number and manufacturer of the electronic cigarette, determining whether the condition of use is satisfied according to the identity authentication information and the device information further comprises:
detecting whether the actual manufacturer of the electronic cigarette with the serial number in the device information matches the manufacturer in the device information.

8. The control method according to claim **7,** wherein the device information further comprises the factory time of the electronic cigarette, determining whether the condition of use is satisfied according to the identity authentication information and the device information further comprises:
detecting whether the actual delivery time of the electronic cigarette with the serial number produced by the manufacturer matches the delivery time in the device information.

9. The control method according to claim **4,** wherein the identity authentication information further comprises a user avatar and/or identity information of a user who redeemed the electronic cigarette; confirming whether the conditions of use of the electronic cigarette are met according to the identity authentication information and obtaining the authentication result comprises:
if the identity authentication information also comprises a user avatar, obtaining the ID avatar corresponding to the identity identifier from the database, and detecting whether the ID avatar matches the user avatar;
if the identity authentication information also comprises the identity information of the user who redeemed the electronic cigarette, detecting whether the identity information matches the identity information of the user corresponding to the identity identifier.

10. A computer-readable storage medium, comprising one or more instructions are stored in the computer-readable storage medium; when the one or more instructions are executed, the control method for an electronic cigarette according to any one of claims **1** to **3** is implemented.

11. A computer-readable storage medium, comprising one or more instructions are stored in the computer-readable storage medium; when the one or more instructions are executed, the control method for an electronic cigarette according to any one of claims **4** to **9** is implemented.

12. A control device for an electronic cigarette, comprising:
a memory, at least one program instruction is stored in the memory; and
a processor, the processor loads and executes the at least one program instruction to implement the control method for an electronic cigarette according to any one of claims **1** to **3.**

13. A control device for an electronic cigarette, comprising:
a memory, at least one program instruction is stored in the memory; and
a processor, the processor loads and executes the at least one program instruction to implement the control method for an electronic cigarette according to any one of claims **4** to **9.**

## Patentansprüche

1. Steuerverfahren für eine elektronische Zigarette, umfassend:
Erhalten von Identitätsauthentifizierungsinformation, wobei die Identitätsauthentifizierungsinformation eine Identitätskennung umfasst;
Senden der Identitätsauthentifizierungsinformation an einen Server;
Empfangen eines vom Server zurückgemeldeten Authentifizierungsergebnisses, wobei das Authentifizierungsergebnis ein Ergebnis der Entscheidung des Servers ist, ob die Nutzungsbedingungen elektronischer Zigaretten gemäß der Identitätsauthentifizierungsinformation erfüllt sind, wobei die Nutzungsbedingungen Erreichen des zulässigen Rauchalters umfassen;
Steuern der elektronischen Zigarette, um entsprechende Vorgänge gemäß dem Authentifizierungsergebnis durchzuführen;
wobei das Erhalten von Identitätsauthentifizierungsinformation Folgendes umfasst:
Erhalten der Identitätsauthentifizierungsinformation von einer Drittanbieteranwendung als Reaktion auf Empfang eines Bestätigungsbefehls, der so konfiguriert ist, dass er dem Aufruf der Drittanbieteranwendung zustimmt; und
Erhalten der Identitätsauthentifizierungsinformation durch Scannen eines Ausweises eines Benutzers, um die Identitätsauthentifizierungsinformation in dem gescannten Bild zu identifizieren, wenn ein Abbruch-Befehl empfangen wird, der so konfiguriert ist, dass er Aufruf der Drittanbieteranwendung abbricht.

2. Steuerverfahren nach Anspruch 1, wobei das Verfahren vor dem Empfang des vom Server zurückgemeldeten Authentifizierungsergebnisses ferner Folgendes umfasst:
Erhalten der Vorrichtungsinformation der elektronischen Zigarette, wobei die Vorrichtungsinformation mindestens eine der folgenden Informationen umfasst: Seriennummer, Vorrichtungstyp, Hersteller und Lieferzeit der elektronischen Zigarette;
Senden der Vorrichtungsinformation an den Server, wobei der Server so konfiguriert ist, dass er das Authentifizierungsergebnis gemäß der Identitätsauthentifizierungsinformation und der Vorrichtungsinformation bestimmt.

3. Steuerverfahren nach Anspruch 1, wobei das Steuerverfahren ferner Folgendes umfasst: nachdem die Kommunikationsverbindung zwischen dem Endgerät und der elektronischen Zigarette getrennt wurde, wird, falls das Endgerät erneut eine Kommunikationsverbindung mit der elektronischen Zigarette herstellt, der Schritt des Erhaltens von Identitätsauthentifizierungsinformation erneut durchgeführt.

4. Steuerverfahren für eine elektronische Zigarette, umfassend:
Erhalten von Identitätsauthentifizierungsinformation durch ein Endgerät;
Empfangen der vom Endgerät gesendeten Identitätsauthentifizierungsinformation, wobei die Identitätsauthentifizierungsinformation eine Identitätskennung umfasst;
Bestätigen, ob die Nutzungsbedingungen der elektronischen Zigarette gemäß der Identitätsauthentifizierungsinformation erfüllt ist, und Erhalten des Authentifizierungsergebnisses, wobei die Nutzungsbedingungen Erreichen des zulässigen Rauchalters umfassen;
Zurückmelden des Authentifizierungsergebnisses an das Endgerät;
wobei das Erhalten von Identitätsauthentifizierungsinformation durch ein Endgerät Folgendes umfasst:
Erhalten der Identitätsauthentifizierungsinformation von einer Drittanbieteranwendung über das Endgerät als Reaktion auf Empfang eines Bestätigungsbefehls, der so konfiguriert ist, dass er dem Aufruf der Drittanbieteranwendung zustimmt; und
Erhalten der Identitätsauthentifizierungsinformation durch Scannen eines Ausweises eines Benutzers über das Endgerät, um die Identitätsauthentifizierungsinformation in dem gescannten Bild zu identifizieren, wenn ein Abbruch-Befehl empfangen wird, der so konfiguriert ist, dass er Aufruf der Drittanbieteranwendung abbricht.

5. Steuerverfahren nach Anspruch 4, wobei das Steuerverfahren ferner Folgendes umfasst:
Empfangen der vom Endgerät gesendeten Vorrichtungsinformation der elektronischen Zigarette, wobei die Vorrichtungsinformation mindestens eine der folgenden Informationen umfasst: Seriennummer, Vorrichtungstyp, Hersteller und Lieferzeit der elektronischen Zigarette;
Bestätigen, ob die Nutzungsbedingungen der elektronischen Zigarette gemäß der Identitätsauthentifizierungsinformation erfüllt ist, und Erhalten des Authentifizierungsergebnisses, umfassend;
Bestimmen, ob die Nutzungsbedingungen gemäß der Identitätsauthentifizierungsinformation und der Vorrichtungsinformation erfüllt sind, und Erhalten des Authentifizierungsergebnisses.

6. Steuerung nach Anspruch 5, wobei, falls die Vorrichtungsinformation die Seriennummer und/oder den Vorrichtungstyp der elektronischen Zigarette umfasst, Bestimmen, ob die Nutzungsbedingung gemäß der Identitätsauthentifizierungsinformation und der Vorrichtungsinformation erfüllt ist, Folgendes umfasst:
Erhalten des zulässigen Rauchalters entsprechend der elektronischen Zigarette gemäß der Vorrichtungsinformation;
Bestimmen, ob der Benutzer das zulässige Rauchalter entsprechend der elektronischen Zigarette gemäß der Identitätsauthentifizierungsinformation erreicht,

7. Steuerverfahren nach Anspruch 5, wobei die Vorrichtungsinformation die Seriennummer und den Hersteller der elektronischen Zigarette enthält, wobei Bestimmen, ob die Nutzungsbedingung gemäß der Identitätsauthentifizierungsinformation und der Vorrichtungsinformation erfüllt ist, ferner Folgendes umfasst:
Erfassen, ob der tatsächliche Hersteller der elektronischen Zigarette mit der Seriennummer in der Vorrichtungsinformation mit dem Hersteller in der Vorrichtungsinformation übereinstimmt.

8. Steuerverfahren nach Anspruch 7, wobei die Vorrichtungsinformation ferner die Werkszeit der elektronischen Zigarette umfasst, wobei Bestimmen, ob die Nutzungsbedingung gemäß der Identitätsauthentifizierungsinformation und der Vorrichtungsinformation erfüllt ist, ferner Folgendes umfasst:
Erfassen, ob die tatsächliche Lieferzeit der elektronischen Zigarette mit der vom Hersteller produzierten Seriennummer mit der Lieferzeit in der Vorrichtungsinformation übereinstimmt.

9. Steuerverfahren nach Anspruch 4, wobei die Identitätsauthentifizierungsinformation ferner einen Benutzer-Avatar und/oder Identitätsinformation eines Benutzers umfasst, der die elektronische Zigarette eingelöst hat, wobei Bestätigen, ob die Nutzungsbedingungen der elektronischen Zigarette gemäß der Identitätsauthentifizierungsinformation erfüllt sind, und wobei Erhalten des Authentifizierungsergebnisses Folgendes umfasst:
falls die Identitätsauthentifizierungsinformation auch einen Benutzer-Avatar umfasst, Erhalten des ID-Avatars, der der Identitätskennung aus der Datenbank entspricht und Erfassen, ob der ID-Avatar mit dem Benutzer-Avatar übereinstimmt;
falls die Identitätsauthentifizierungsinformation auch die Identitätsinformationen des Benutzers umfasst, der die elektronische Zigarette eingelöst hat, Erfassen, ob die Identitätsinformation mit der Identitätsinformation des Benutzers übereinstimmt, der der Identitätskennung entspricht.

10. Computerlesbares Speichermedium, das eine oder mehrere Befehle umfasst, die in dem computerlesbaren Speichermedium gespeichert sind, wobei, wenn die eine oder mehreren Befehle ausgeführt werden, das Steuerverfahren für eine elektronische Zigarette nach irgendeinem der Ansprüche 1 bis 3 implementiert wird.

11. Computerlesbares Speichermedium, das eine oder mehrere Befehle umfasst, die in dem computerlesbaren Speichermedium gespeichert sind, wobei, wenn die eine oder mehreren Befehle ausgeführt werden, das Steuerverfahren für eine elektronische Zigarette nach irgendeinem der Ansprüche 4 bis 9 implementiert wird.

12. Steuervorrichtung für eine elektronische Zigarette, umfassend:
einen Speicher, wobei mindestens ein Programmbefehl in dem Speicher gespeichert ist; und
einen Prozessor, wobei der Prozessor den mindestens einen Programmbefehl lädt und ausführt, um das Steuerverfahren für eine elektronische Zigarette nach irgendeinem der Ansprüche 1 bis 3 zu implementieren.

13. Steuervorrichtung für eine elektronische Zigarette, umfassend:
einen Speicher, wobei mindestens ein Programmbefehl in dem Speicher gespeichert ist; und
einen Prozessor, wobei der Prozessor den mindestens einen Programmbefehl lädt und ausführt, um das Steuerverfahren für eine elektronische Zigarette nach irgendeinem der Ansprüche 4 bis 9 zu implementieren.

## Revendications

1. Procédé de commande pour une cigarette électronique, comprenant :
l'obtention d'informations d'authentification d'identité, dans lequel les informations d'authentification d'identité comprennent un identifiant d'identité ;
l'envoi des informations d'authentification d'identité à un serveur ;
la réception d'un résultat d'authentification renvoyé par le serveur, le résultat d'authentification étant un résultat de la détermination par le serveur du fait que les conditions d'utilisation de cigarettes électroniques sont remplies selon les informations d'authentification d'identité, les conditions d'utilisation comprenant le fait d'avoir atteint l'âge légal de fumer ;
la commande de la cigarette électronique pour effectuer des opérations correspondantes en fonction du résultat d'authentification ;
dans lequel l'obtention d'informations d'authentification d'identité comprend :
l'obtention des informations d'authentification d'identité à partir d'une application tierce en réponse à la réception d'une instruction de confirmation configurée pour accepter l'appel de l'application tierce ; et
l'obtention des informations d'authentification d'identité en scannant une carte d'identité d'un utilisateur afin d'identifier les informations d'authentification d'identité dans l'image scannée lors de la réception d'une instruction d'annulation configurée pour annuler l'appel de l'application tierce.

2. Procédé de commande selon la revendication 1, dans lequel, avant la réception d'un résultat d'authentification renvoyé par le serveur, le procédé comprend en outre :
l'obtention des informations de dispositif sur la cigarette électronique, dans lequel les informations de dispositif comprennent au moins l'un parmi le numéro de série, le type de dispositif, le fabricant, et la date de livraison de la cigarette électronique ;
l'envoi des informations de dispositif au serveur, le serveur étant configuré pour déterminer le résultat d'authentification en fonction des informations d'authentification d'identité et des informations de dispositif.

3. Procédé de commande selon la revendication 1, dans lequel le procédé de commande comprend en outre : une fois la connexion de communication interrompue entre le terminal et la cigarette électronique, si le terminal établit à nouveau une connexion de communication avec la cigarette électronique, l'étape consistant à obtenir des informations d'authentification d'identité est à nouveau effectuée.

4. Procédé de commande pour une cigarette électronique, comprenant :
l'obtention d'informations d'authentification d'identité par un terminal ;
la réception des informations d'authentification d'identité envoyées par le terminal, dans lequel les informations d'authentification d'identité comprennent un identifiant d'identité ;
la confirmation du fait que les conditions d'utilisation de cigarette électronique sont remplies en fonction des informations d'authentification d'identité, et l'obtention du résultat d'authentification, les conditions d'utilisation comprenant le fait d'avoir atteint l'âge légal de fumer ;
le renvoi du résultat d'authentification au terminal ;
dans lequel l'obtention d'informations d'authentification d'identité par un terminal comprend :
l'obtention, par le terminal, des informations d'authentification d'identité à partir d'une application tierce en réponse à la réception d'une instruction de confirmation configurée pour accepter l'appel de l'application tierce ; et
l'obtention, par le terminal, des informations d'authentification d'identité en scannant une carte d'identité d'un utilisateur afin d'identifier les informations d'authentification d'identité dans l'image scannée lors de la réception d'une instruction d'annulation configurée pour annuler l'appel de l'application tierce.

5. Procédé de commande selon la revendication 4, dans lequel le procédé de commande comprend en outre :
la réception des informations de dispositif sur la cigarette électronique envoyées par le terminal, dans lequel les informations de dispositif comprennent au moins l'un parmi le numéro de série, le type de dispositif, le fabricant, et la date de livraison de la cigarette électronique ;
la confirmation du fait que les conditions d'utilisation de la cigarette électronique sont remplies en fonction des informations d'authentification d'identité, et l'obtention du résultat d'authentification, comprenant :
la détermination du fait que la condition d'utilisation est remplie en fonction des informations d'authentification d'identité et des informations de dispositif, et l'obtention du résultat d'authentification.

6. Procédé de commande selon la revendication 5, dans lequel, si les informations de dispositif comprennent le numéro de série et/ou le type de dispositif de la cigarette électronique, la détermination du fait que la condition d'utilisation est remplie en fonction des informations d'authentification d'identité et des informations de dispositif comprend :
l'obtention de l'âge légal de fumer correspondant à la cigarette électronique, en fonction des informations de dispositif ;
la détermination du fait que l'utilisateur a atteint l'âge légal de fumer correspondant à la cigarette électronique, en fonction des informations d'authentification d'identité.

7. Procédé de commande selon la revendication 5, dans lequel les informations de dispositif comportent le numéro de série et le fabricant de la cigarette électronique, la détermination du fait que la condition d'utilisation est remplie en fonction des informations d'authentification d'identité et des informations de dispositif comprend en outre :
la détection du fait que le fabricant réel de la cigarette électronique avec le numéro de série indiqué dans les informations de dispositif correspond au fabricant indiqué dans les informations de dispositif.

8. Procédé de commande selon la revendication 7, dans lequel les informations de dispositif comprennent en outre l'heure d'usine de la cigarette électronique, la détermination du fait que la condition d'utilisation est remplie en fonction des informations d'authentification d'identité et des informations de dispositif comprend en outre :
la détection du fait que la date de livraison réelle de la cigarette électronique avec le numéro de série produite par le fabricant correspond à la date de livraison indiquée dans les informations de dispositif.

9. Procédé de commande selon la revendication 4, dans lequel les informations d'authentification d'identité comprennent en outre un avatar utilisateur et/ou des informations d'identité d'un utilisateur qui a échangé la cigarette électronique ; la confirmation du fait que les conditions d'utilisation de la cigarette électronique sont remplies en fonction des informations d'authentification d'identité et l'obtention du résultat d'authentification comprennent :
si les informations d'authentification d'identité comprennent également un avatar utilisateur, l'obtention de l'avatar d'identité correspondant à l'identifiant d'identité à partir de la base de données, et la détection du fait que l'avatar d'identité correspond à l'avatar utilisateur ;
si les informations d'authentification d'identité comprennent également les informations d'identité de l'utilisateur qui a échangé la cigarette électronique, la détection du fait que les informations d'identité correspondent aux informations d'identité de l'utilisateur correspondant à l'identifiant d'identité.

10. Support de stockage lisible par ordinateur, comprenant une ou plusieurs instructions stockées dans le support de stockage lisible par ordinateur ; lorsque la ou les instructions sont exécutées, le procédé de commande pour une cigarette électronique selon l'une quelconque des revendications 1 à 3 est mis en œuvre.

11. Support de stockage lisible par ordinateur, comprenant une ou plusieurs instructions stockées dans le support de stockage lisible par ordinateur ; lorsque la ou les instructions sont exécutées, le procédé de commande pour une cigarette électronique selon l'une quelconque des revendications 4 à 9 est mis en œuvre.

12. Dispositif de commande pour une cigarette électronique, comprenant :
une mémoire, au moins une instruction de programme étant stockée dans la mémoire ; et
un processeur, le processeur chargeant et exécutant la au moins une instruction de programme afin de mettre en œuvre le procédé de commande pour une cigarette électronique selon l'une quelconque des revendications 1 à 3.

13. Dispositif de commande pour une cigarette électronique, comprenant :
une mémoire, au moins une instruction de programme étant stockée dans la mémoire ; et
un processeur, le processeur chargeant et exécutant la au moins une instruction de programme afin de mettre en œuvre le procédé de commande pour une cigarette électronique selon l'une quelconque des revendications 4 à 9.
